# EUROPÄISCHE PATENTSCHRIFT

(11) **EP 0 780 276 B1**
(45) Veröffentlichungstag und Bekanntmachung des Hinweises auf die Patenterteilung: **11.06.2003**
(21) Anmeldenummer: 96119030.3
(22) Anmeldetag: 27.11.1996
(51) Int. Cl.: B60T 8/00

(54) **Bremsanlage für ein Kraftfahrzeug**
Braking device for a vehicle
Dispositif de freinage pour un véhicule

(30) Priorität: 22.12.1995 DE 19548392
(43) Veröffentlichungstag der Anmeldung: 25.06.1997
(73) Patentinhaber: SIEMENS AKTIENGESELLSCHAFT, 80333 München (DE)
(72) Erfinder: Brandmeier, Thomas, Dr., 93051 Regensburg (DE); Zittlau, Dirk, 92348 Stöckelsberg (DE)

(56) Entgegenhaltungen:
- EP-A- 0 263 668
- US-A- 5 288 139

## Beschreibung

Die Erfindung betrifft eine Bremsanlage nach dem Oberbegriff von Anspruch 1.

Personenkraftwagen sind heutzutage beinahe ausschließlich mit hydraulischen Bremsanlagen versehen. Steigende Anforderungen an zusätzliche Bremsfunktionen - wie Antiblockiersysteme, Fahrstabilitätsysteme, Traktionskontrollen und fortschrittliche Tempomaten - sowie Forderungen nach einer Verringerung der Montage- und Wartungskosten und einer Verkleinerung der Hydraulikeinrichtungen haben zu der Entwicklung rein elektrischer Bremssysteme (auch unter dem Schlagwort "Brake by Wire" bekannt) geführt.

Bei solchen elektrischen Bremssystemen ist das von dem Fahrer betätigte Bremssignal kraftmäßig von den Bremsen getrennt, d. h. die von dem Fahrer ausgehende Bremsmomentanforderung wird nicht mehr direkt als Kraft über ein hydraulisches (oder druckluftbetätigtes) System übertragen, sondern nur noch als elektrisches Signal über elektrische Leitungen. Mit dem elektrischen Signal wird ein Bremsaktuator (oder -aktor) gesteuert, der mit einer unabhängigen Energieversorgung das erforderliche Bremsmoment erzeugt. In der Regel erfolgt diese Energieversorgung aus dem elektrischen Bordnetz und das Bremsmoment wird durch einen elektromechanischen oder elektrohydraulischen Aktor erzeugt und auf eine Bremsscheibe oder - trommel übertragen (vgl. die ältere Anmeldung DE 19529664.8, unser Zeichen GR 95 P 1763).

Da das Bremssystem eine zentrale Sicherheitsfunktion des Kraftfahrzeugs darstellt, muß es eine weitgehende Ausfallsicherheit gewährleisten, und im Störungsfall zumindest mit verringerter Wirkung ein Abbremsen des Fahrzeugs ermöglichen. Dazu wird vom Gesetzgeber ein zweikreisiges Bremssystem gefordert, das in der Regel durch zwei getrennte hydraulische Bremskreise realisiert ist.

Bei einer bekannten Bremsanlage mit elektrisch gesteuerten Radbremseinrichtungen, die aus je einem Steuerteil und einem Aktor bestehen, durch die die einzelnen Radbremsen unabhängig voneinander und in Abhängigkeit von Betätigungen des Bremspedals aktiviert werden, ist ein Notfallsystem vorgesehen, durch das bei Ausfall eines oder mehrerer Aktoren ein Abbremsen des Kraftfahrzeugs ermöglicht wird (EP-A-0 486 281). Dabei werden fehlerhafte Aktoren erkannt und im Falle einer Bremsung die einwandfreien Aktoren oder einige von ihnen nach einem vorgegebenen Schema betätigt.

Eine andere bekannte Bremsanlage weist zwei getrennte elektrische Steuerkreise für je zwei Radbremsen auf. Beide empfangen Steuersignale von einer Einrichtung, die Betätigungen des Bremspedals erfaßt und weisen je einen eigenen Energieversorgungskreis auf (GB 2 225 397 A). Zusätzliche, der Sicherheit oder dem Komfort beim Betrieb des Kraftfahrzeugs dienende Bremsfunktionen können mit dieser Anlage nicht ausgeführt werden.

Bei einem weiteren bekannten Bremssystem ist die Steuerelektronik dezentral ausgebildet. Ein Zentralmodul und mehrere Radmodule weisen jeweils Mikroprozessoren mit eigener "Intelligenz" auf. Die Radmodule sind dem Zentralmodul hierarchisch unterstellt (EP 0 467 112 A). Der schaltungs- und programmtechnische Aufwand ist erheblich.

Aus der Druckschrift EP 0 263 668 A2 ist ein Fahrzeugbremssystem bekannt, das ein erstes Steuergerät aufweist, welches berechnete elektromagnetische Signale an Modulationsventile einer ersten Achse (Vorderachse) liefert, und ein zweites Steuergerät aufweist, das ein berechnetes elektromagnetisches Steuersignal an elektromagnetische Modulationsventile einer zweiten Achse (Hinterachse) liefert. Jedes der Steuergeräte erhält dabei voneinander unabhängige elektromagnetische Signale von einem vom Fahrer betätigten Signalsteuergerät entsprechend der gewünschten Fahrzeugverzögerung. Des Weiteren ist ein Überwachungsmittel zur Anzeige eines Ungleichgewichts zwischen den unabhängigen elektromagnetischen Signalen und zum Konditionieren der Steuergeräte derart, dass jeweils dasjenige der beiden unabhängigen Signale verwendet wird, welches als zuverlässiger erscheint, vorgesehen.

Aus der Druckschrift US 5,288,139 ist ein Fahrzeugbremssystem mit einer Hauptsteuerung und mehreren Radbremseinrichtungen, bestehend aus Steuerteil und Aktor, bekannt. Der Sollbremsdruck für die einzelnen Radbremseinrichtung wird dabei zentral in der Hauptsteuerung festgelegt.

Der Erfindung liegt die Aufgabe zugrunde, zusätzliche Funk tionen der Bremsen mit einfachen Mitteln zu realisieren.

Diese Aufgabe wird erfindungsgemäß durch die Bremsanlage nach Anspruch 1 gelöst. Zweckmäßige Weiterbildungen der Erfindung sind in den Unteransprüchen niedergelegt.

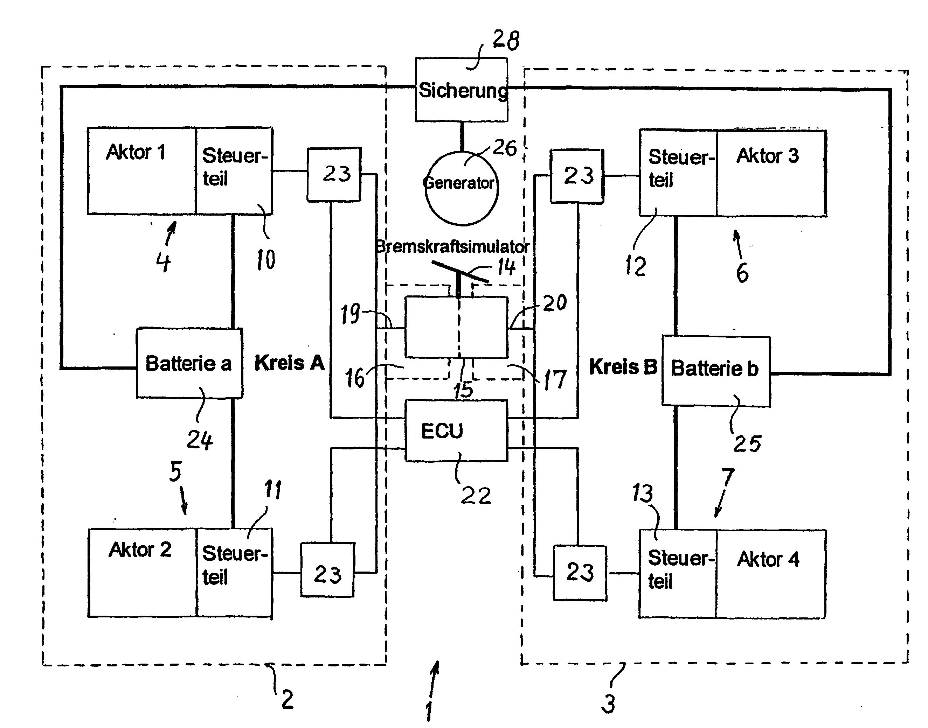

Eine Bremsanlage **1** weist zwei Bremskreise, einen Kreis A und einen Kreis B auf, die in der Zeichnung durch gestrichelte Umrandungen **2** bzw. **3** angedeutet sind. Sie enthält vier Radbremseinrichtungen **4, 5, 6** und 7 von denen die Radbremseinrichtungen 4 und 5 Bestandteil des Bremskreises A und die Radbremseinrichtungen 6, 7 Bestandteile des Bremskreises B sind.

Jede Radbremseinrichtung besteht aus einem Aktor (Aktor 1 bis Aktor 4) und einem zugehörigen Steuerteil 10, 11, 12 bzw. 13. Einzelheiten der Aktoren sind hier nicht dargestellt, sie können elektrohydraulisch ausgebildet sein (wie in unserer vorgenannten älteren Anmeldung beschrieben) oder mit einem elektromechanischen Antrieb versehen sein,(wie in der EP-B 0 486 281).

Mit einem Bremspedal 14 des Kraftfahrzeugs ist eine Einrichtung - z.B. ein Bremskraftsimulator 15 - verbunden, durch die Betätigungen des Bremspedals 14 erfaßt werden. Der Bremskraftsimulator 15 enthält zwei getrennte elektronische Sensorkreise 16 und 17, mit denen der vom Fahrer vorgegebene Pedalweg und/oder die Pedalkraft gemessen werden. Die gemessene Größe wird in Steuersignale umgesetzt, die über eine erste Signalausgangsleitung 19 dem Bremskreis A und über eine zweite Signalausgangsleitung 20 dem Bremskreis B zugeführt werden. Diese Steuersignale stellen die Bremssollwerte dar, sie gelangen zu den Radbremseinrichtungen 4, 5 bzw. 6, 7 und veranlassen dort die zugehörigen Aktoren, die jeweiligen Bremsen zu betätigen. Damit führt die Bremsanlage 1 die von dem Fahrer des Kraftfahrzeugs gewünschten Bremsungen durch, und sie entspricht auch, da sie in zwei Bremskreise aufgeteilt ist, der geforderten Ausfallsicherheit.

Die Bremsanlage 1 weist außerdem eine elektronische Steuereinrichtung - oder Zusatzsteuereinrichtung 22 (auch als ECU bezeichnet) auf, die lediglich zusätzliche Funktionen der Bremsen steuert, durch die die Sicherheit und/oder Komfort des Kraftfahrzeugs erhöht werden und die eingangs schon aufgeführt sind (z.B. ABS, Traktionskontrolle usw.). Für eine ausfallsichere Funktion der erfindungsgemäßen Bremsanlage 1 ist die Zusatzsteuereinrichtung 22 nicht notwendig.

Die von der Steuereinrichtung 22 erzeugten Steuersignale gelangen zu elektronischen Elementen oder Schaltern 23, in denen sie den vom Bremskraftsimulator 14 erzeugten Steuersignalen oder Bremssollwerten überlagert werden. Diese Überlagerung entspricht der Signalüberlagerung in hydraulischen Bremsanlagen, ist aber mit elektronischen Elementen sehr einfach zu realisieren. Die Elemente 23 sind so aufgebaut, z. B. als Relais, daß die vom Bremskraftsimulator erzeugten Steuersignale auch bei einem Ausfall der zusätzlichen elektronischen Steuereinrichtung 22 in allen Fällen zu den Radbremseinrichtungen 4 bis 7 gelangen. Bei einem möglichen Ausfall der Steuereinrichtung 22 werden nur die Zusatzfunktionen der Bremsanlage, wie z. B. ABS, beeinträchtigt, nicht aber die normale Bremsfunktion.

Die Energieversorgung der Bremsanlage 1 ist ebenfalls in zwei Kreise unterteilt, die jeweils eine erste Batterie a und eine zweite Batterie b enthalten. Die der Energieversorgung dienenden Leitungen sind in der Zeichnung mit dicken Linien dargestellt, während die Signalleitungen mit dünnen Linien gezeichnet, sind. Als Energiespeicher 24 und 25 dient im Falle der Batterie a die normale Fahrzeugbatterie, während im Falle der Batterie b eine zusätzliche kleinere, dem Leistungsbedarf des angeschlossenen Bremskreises angepaßte Batterie verwendet wird. Anstelle der Batterie b kann als Energiespeicher 25 auch der Generator 26 des Kraftfahrzeugs mit einer kleinen Batterie als Notfallpuffer verwendet werden, die für einige wenige Bremsvorgänge ausreichend Kapazität hat. Die beiden Energieversorgungskreise sind über eine Sicherung 28 miteinander verbunden, die im Fehlerfall, z. B. bei einem Kurzschluß, beide Kreis vollständig voneinander trennt.

Durch die erfindungsgemäße Bremsanlage werden folgende mögliche Fehler aufgefangen: ein Ausfall der elektronischen Steuereinrichtung 22 oder eine Unterbrechung der mit ihr verbundenen elektrischen Leitungen, ein Ausfall eines oder zweier Aktoren, ein Ausfall einer Energieversorgung, eine Unterbrechung der Verbindungsleitungen innerhalb der Bremsanlage und ein Kurzschluß in einem Versorgungskreis oder in dem Generator 26.

Die Steuerteile 10 bis 13 enthalten zweckmäßigerweise einen Mikroprozessor, sie bilden zusammen mit dem jeweiligen Aktor eine selbständige Einheit. Einzelheiten der Steuerung sind hier nicht dargestellt, da sie für sich bekannt ist und von der Erfindung nicht berührt wird. Werden die Steuersignale des Bremskraftsimulators als pulsweitenmoduliertes Signal übertragen, so wird das Steuerteil 10 bis 13 als PWM-Endstufe mit elektronischer Kommutierung ausgeführt.

Die erfindungsgemäße Bremsanlage stellt eine völlig gleichwertige und leistungsfähige Analogie zu den üblichen zweikreisigen hydraulischen Bremsanlagen mit allen Zusatzfunktionen dar. Dies wird aber mit geringerem Aufwand und einfacheren Mitteln erreicht.

## Patentansprüche

1. Bremsanlage (1) für ein Kraftfahrzeug mit elektrisch gesteuerten Radbremseinrichtungen (4-7), die aus je einem Steuerteil (10-13) und einem Aktor bestehen, durch die die einzelnen Radbremsen unabhängig voneinander und in Abhängigkeit von Betätigungen des Bremspedals aktiviert werden, und mit zwei getrennten elektrischen Steuerkreisen (2, 3), die für je einen Teil der Radbremseinrichtungen (4-7) vorgesehen sind, die beide von einer Betätigungen des Bremspedals (14) erfassenden Einrichtung (15) Steuersignale empfangen und die je einen eigenen Energieversorgungskreis (a, b) aufweisen, so daß auch bei Ausfall eines oder mehrerer Aktoren ein Abbremsen des Kraftfahrzeugs möglich ist, **dadurch gekennzeichnet, daß** eine zusätzliche zentrale Steuereinrichtung (22) für zusätzliche Bremsfunktionen Bremssteuersignale erzeugt und den Steuersignalen der Einrichtung (15) für alle Radbremseinrichtungen (4-7) überlagert, so daß der Sicherheit oder dem Komfort des Kraftfahrzeugs dienende Bremsfunktionen gesteuert werden.

2. Bremsanlage nach Anspruch 1, **dadurch gekennzeichnet, daß** ein erster Energieversorgungskreis von der Fahrzeugbatterie (Batterie a) und ein zweiter Energieversorgungskreis von einer Zusatzbatterie (Batterie b) mit einer an den Leistungsbedarf des Bremskreises angepaßten Kapazität gespeist wird.

3. Bremsanlage nach Anspruch 1, **dadurch gekennzeichnet, daß** ein erster Energieversorgungskreis von der Fahrzeugbatterie (Batterie a) und ein zweiter Energieversorgungskreis von dem Generator (26) des Kraftfahrzeugs und einer Zusatzbatterie mit einer für einige Bremsungen genügenden Kapazität gespeist wird.

4. Bremsanlage nach Anspruch 1, **dadurch gekennzeichnet, daß** die Steuerteile (10-13) für die Aktoren mikroprozessorgesteuert sind.

## Claims

1. Braking device (1) for a motor vehicle having electrically controlled wheel brake devices (4-7) which are composed of in each case one control part (10-13) and one actuator by means of which the individual wheel brakes are actuated independently of one another and as a function of activations of the brake pedal, and having two separate electrical control circuits (2, 3) which are provided for, in each case, one part of the wheel brake devices (4-7) which both receive control signals from a device (15) which senses activations of the brake pedal (14) and which each have a separate power supply circuit (a, b) so that even if one or more actuators fail it is possible to brake the motor vehicle, **characterized in that** an additional central control device (22) for additional braking functions generates brake control signals and superimposes them on the control signals of the device (15) for all the wheel brake devices (4-7) so that braking functions for the sake of the safety or the comfort of the motor vehicle are controlled.

2. The brake system as claimed in Claim 1, **characterized in that** a first power supply circuit is supplied by the vehicle battery (battery a) and a second power supply circuit is supplied by an additional battery (battery b) with a capacitance which is adapted to the power requirement of the brake circuit.

3. Braking device according to Claim 1, **characterized in that** a first power supply circuit is supplied from the vehicle battery (battery a) and a second power supply circuit is supplied from the generator (26) of the motor vehicle and an additional battery with a capacitance which is sufficient for several braking operations.

4. Braking device according to Claim 1, **characterized in that** the control parts (10-13) for the actuators are microprocessor-controlled.

## Revendications

1. Dispositif de freinage (1) pour un véhicule, ayant des dispositifs de freinage de roue (4 - 7) commandés électriquement, qui se composent chacun d'une commande (10 - 13) et d'un acteur, grâce auxquels les différents freins de roue sont activés indépendamment l'un de l'autre en fonction des manoeuvres de la pédale de frein, et ayant deux circuits électriques de commande séparés (2, 3), qui sont prévus chacun pour une partie des dispositifs de freinage de roue (4 - 7), qui reçoivent tous les deux des signaux de commande venant d'un dispositif (15) qui détecte les manoeuvres de la pédale de frein (14) et qui comportent chacun un circuit propre d'alimentation en énergie (a, b) de telle sorte que, même en cas de défaillance de l'un ou de plusieurs acteurs, un freinage du véhicule est possible, **caractérisé par le fait qu**'un dispositif centralisé de contrôle supplémentaire (22) pour des fonctions de freinage supplémentaires génère des signaux de commande du freinage et les superpose aux signaux de commande du dispositif (15) pour tous les dispositifs de freinage de roue (4 - 7) si bien que des fonctions de freinage, qui servent à la sécurité ou au confort du véhicule, peuvent être contrôlées.

2. Dispositif de freinage selon la revendication 1 **caractérisé par le fait qu**'un premier circuit d'alimentation en énergie est alimenté par la batterie du véhicule (batterie a) et qu'un deuxième circuit d'alimentation en énergie est alimenté par une batterie supplémentaire (batterie b) ayant une capacité adaptée aux besoins en puissance du circuit de freinage.

3. Dispositif de freinage selon la revendication 1 **caractérisé par le fait qu**'un premier circuit d'alimentation en énergie est alimenté par la batterie du véhicule (batterie a) et qu'un deuxième circuit d'alimentation en énergie est alimenté par la génératrice (26) du véhicule et une batterie supplémentaire ayant une capacité suffisante pour quelques freinages.

4. Dispositif de freinage selon la revendication 1 **caractérisé par le fait que** les commandes (10 - 13) pour les acteurs sont contrôlées par microprocesseur.
